Europäisches Patentamt

European Patent Office

Office européen des brevets

(11) Veröffentlichungsnummer: **0 060 568**
A1

## (12) EUROPÄISCHE PATENTANMELDUNG

(21) Anmeldenummer: 82102171.4

(22) Anmeldetag: 17.03.82

(51) Int. Cl.³: **B 62 M 7/04**, B 62 K 11/02

(30) Priorität: 18.03.81 DE 3110616

(43) Veröffentlichungstag der Anmeldung: 22.09.82
Patentblatt 82/38

(84) Benannte Vertragsstaaten: AT DE FR IT NL

(71) Anmelder: ZÜNDAPP-WERKE GMBH, Anzinger Strasse 1-3, D-8000 München 80 (DE)

(72) Erfinder: Metzger, Manfred, Adalbert-Stifter-Strasse 4, D-8939 Bad Wörishofen (DE)

(54) Lagerung für Motor und Hinterradschwinge eines motorisierten Zweiradfahrzeugs.

(57) Bei einem motorisierten Zweiradfahrzeug mit Hinterradschwinge (10), bei dem zwischen Motor und Hinterrad ein Kettentrieb vorgesehen ist und dessen Rahmen ein quer zur Fahrtrichtung angeornetes Lagerrohr (1) aufweist, ist eine gemeinsame Lagerung für den Motor und die Hnterradschwinge (10) unter Einsatz elastischer Buchsen (2) innerhalb des Lagerrohres (1) vorgesehen. Innerhalb der Lagerung kann eine Tretkurbelwelle (15) für einen Tretkurbelantrieb des Zweiradfahrzeugs angeordnet werden.

EP 0 060 568 A1

ACTORUM AG

Lagerung für Motor und Hinterradschwinge eines
motorisierten Zweiradfahrzeugs


Die Erfindung betrifft eine Lagerung für Motor und Hinterradschwinge eines motorisierten Zweiradfahrzeugs nach
dem Oberbegriff des Anspruchs 1.

Bei einer bekannten Lagerung dieser Art (DE-AS 1 189 881)
ist die elastische Motorlagerung auf der Außenseite des
Lagerrohres vorgesehen, die Schwingenlagerung nicht elastisch ausgebildet und in der Lagerhülse ein Lagerbolzen
mit Gewinde angeordnet, der gegen die Stirnseiten der als
Distanzrohr wirkenden Lagerhülse verschraubt ist. Bei dieser Lagerung können sich infolge der unterschiedlich elastischen Lagerung des Motors und der Hinterradschwinge
durch den Kettenzug hervorgerufene Versetzungen des Abtriebsritzels des Motors gegenüber dem Kettenrad des Hinterrades ergeben. Ein derartiger Kettenlinienversatz kann
zu erhöhtem Verschleiß führen.

Der Erfindung liegt die Aufgabe zugrunde, eine Lagerung
der eingangs genannten Art zu schaffen, bei der ein Kettenlinienversatz nicht auftritt und die zudem eine Tretkurbelwelle aufnehmen kann. Die Lösung dieser Aufgabe ist
im Kennzeichen des Anspruchs 1 angegeben. Durch sie wird
bei einfacher, kompakter und nach außen weitgehend geschlossener Bauweise erreicht, daß der Motor und die Hinterradschwinge eine gemeinsame elastische Lagerung aufweisen. Der Motor und die Hinterradschwinge können zwar
je für sich um die gemeinsame Schwingachse schwingen, sich aber nicht unter der Einwirkung des Kettenzugs um die lotrechte Achse gegeneinander verdrehen. Es ergibt sich in etwa ein Triebsatzschwingeneffekt. Da nicht nur der Motor, sondern indirekt auch die Hinterradschwinge elastisch am Rahmen abgestützt ist, wird eine Verminderung von Vibrationen und damit eine Geräuschreduzierung erzielt. Der durch die Erfindung ermöglichte Einsatz einer Tretkurbelwelle in der die Hinterradschwinge tragenden Lagerhülse eröffnet die Möglichkeit, nach dem Baukastenprinzip wahlweise einen Tretkurbelantrieb vorzusehen oder wegzulassen, ohne daß das Fahrzeug bis auf die unmittelbar zu dem Tretkurbelantrieb gehörenden Teile umgestaltet werden muß. Wird eine Tretkurbelwelle eingesetzt, ist diese ebenfalls elastisch am Rahmen des Fahrzeugs abgestützt. Wegen der übereinstimmenden Anordnung der Achse der Tretkurbelwelle und der Schwingachse des Motors und der Hinterradschwinge wirken sich Schwingbewegungen des Motors und der Hinterradschwinge auf die Tretkurbelwelle nicht aus, so daß sich wegen der ruhigen Lage der Tretkurbelwelle ein angenehmes Fahrgefühl ergibt.

In der Zeichnung sind zwei Ausführungsbeispiele des Erfindungsgegenstandes schematisch dargestellt, und zwar zeigt

Fig. 1 eine Lagerung ohne Tretkurbelwelle und

Fig. 2 eine Lagerung mit Tretkurbelwelle.

In ein Lagerrohr 1, das Bestandteil des nicht weiter dargestellten Rahmens eines motorisierten Zweiradfahrzeugs, z.B. eines Mokicks, ist und sich quer zur Fahrtrichtung erstreckt, sind von den beiden Seiten her zwei als Kunststoffprofilbundbuchsen ausgebildete elastische Buchsen 2
eingeschoben. Zwischen der Stirnseite des Lagerrohres 1
und dem Bund der elastischen Buchse 2 ist jeweils ein der
Vergrößerung der Auflagefläche dienender Metallring 3 angeordnet. In die elastischen Buchsen 2 ist jeweils eine
Lagerbuchse 4 eingeschoben, an der ein Motortrageblech 5
angeschweißt ist, das einen Bund bildet, der sich stirnseitig an die Außenseite des Bundes der elastischen Buchse 2 legt. In die Lagerbuchsen 4 ist jeweils eine ebenfalls als Bundbuchse ausgebildete Gleitlagerbuchse 6 aus
Sintermetall eingepreßt. Der Bund der Gleitlagerbuchse 6
liegt an der außenliegenden Stirnseite der Lagerbuchse 4
an. Die Gleitlagerbuchsen 6 nehmen eine Lagerhülse 7 auf,
welche beiderseits der Gleitlagerbuchsen 6 die Lageraugen 8, 9 einer Hinterradschwinge 10 trägt. An dem einen
Ende der Lagerhülse 7 ist eine Kopfscheibe 11 mit Außensechskant angeschweißt. Das andere Ende der Lagerhülse 7
trägt ein Außengewinde, auf das eine Sechskantmutter 12
aufgeschraubt ist. Beim Festziehen der Sechskantmutter 12
legen sich die Lageraugen 8, 9 der Hinterradschwinge 10
außen an die Gleitlagerbuchsen 6, so daß sich eine axiale
Verspannung der gesamten Lagerung in Richtung der Achse
13 der Lagerhülse 7 ergibt. Die beiden Stirnseiten der
Lagerhülse 7 sind durch Kunststoffstopfen 14 verschlossen.

Der an den Motortrageblechen 5 befestigte Motor des Zweiradfahrzeugs ist über die elastischen Buchsen 2 elastisch
an dem Fahrzeugrahmen abgestützt. Auch die Lagerhülse 7
und damit die von ihr getragenen Lageraugen 8, 9 der Hinterradschwinge 10 stützen sich über die elastischen Buchsen 2 elastisch an dem Lagerrohr 1 und damit an dem
Fahrzeugrahmen ab. Da die Lagerhülse 7 in den Gleitlagerbuchsen 6 geführt ist, kann die Hinterradschwinge 10 einerseits ungehindert um die Achse 13 der Lagerhülse 7 schwingen, ist aber andererseits in seitlicher Richtung gegenüber dem Motor exakt geführt. Trotz der elastischen Lagerung der Hinterradschwinge 10 an dem Fahrzeugrahmen ist
die Seitenführung der Hinterradschwinge 10 gewährleistet.
Hierzu trägt vor allem auch bei, daß die Lagerung in Richtung der Achse 13 verspannbar ist.

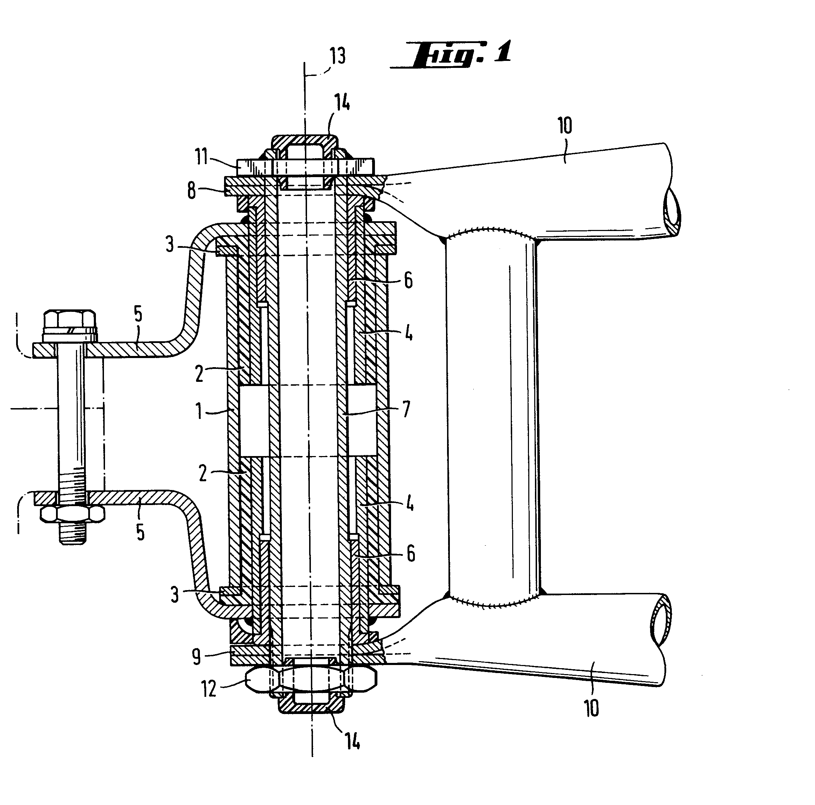

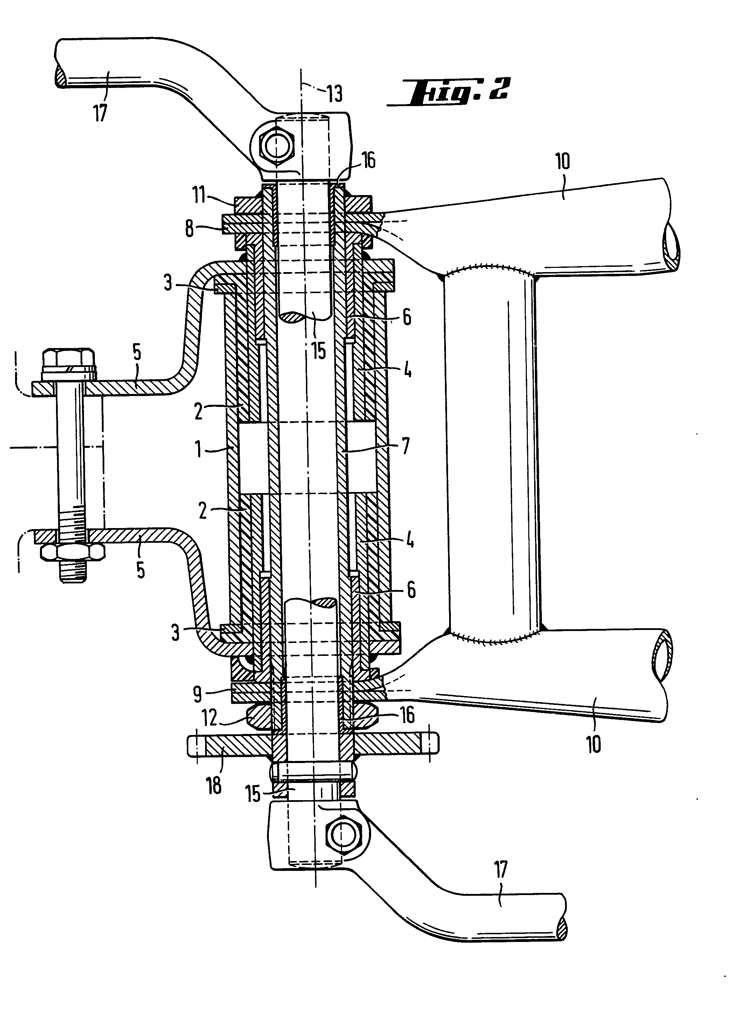

Das Ausführungsbeispiel nach Fig. 2 unterscheidet sich
von dem nach Fig. 1 lediglich dadurch, daß die Lagerung
zusätzlich eine Tretkurbelwelle 15 in der Lagerhülse 7
trägt. Zur Lagerung der Tretkurbelwelle 15 sind in die
Lagerhülse 7 an deren Enden Gleitlagerelemente 16 eingesetzt, so daß die Tretkurbelwelle 15 in den Lagerverbund
mit einbezogen ist. An der Tretkurbelwelle 15 sind in
üblicher Weise Pedale 17 und ein Kettenzahnrad 18 für den
Tretkurbelantrieb befestigt.

- 5 -

## Patentansprüche

1. Lagerung für Motor und Hinterradschwinge (10) eines motorisierten Zweiradfahrzeugs, bei dem zwischen Motor und Hinterrad ein Kettentrieb vorgesehen ist und dessen Rahmen ein quer zur Fahrtrichtung angeordnetes Lagerrohr (1) aufweist, an dem sich der Motor über zwei mit Abstand voneinander angeordnete Lagerbuchsen (4) unter Zwischenschaltung zweier elastischer Buchsen (2) abstützt und das eine Lagerhülse (7) aufnimmt, die an beiden Enden des Lagerrohres (1) aus diesem herausragt und die beiderseits des Lagerrohres (1) angeordneten Lageraugen (8, 9) der Hinterradschwinge (10) trägt, die durch eine in Richtung der Achse des Lagerrohres wirkende Verschraubung in dieser Richtung gehalten sind, d a d u r c h   g e k e n n z e i c h n e t, daß die Lagerbuchsen (4) innerhalb des Lagerrohres (1) angeordnet sind und die Lagerung für die Lagerhülse (7) bilden und daß die in Richtung der Achse des Lagerrohres (1) wirkende Verschraubung (Mutter 12) an der Lagerhülse (7) unmittelbar vorgesehen ist.

2. Lagerung nach Anspruch 1, d a d u r c h   g e k e n n z e i c h n e t, daß in jede der beiden Lagerbuchsen (4) eine Gleitlagerbuchse (6) als Lagerung für die Lagerhülse (7) eingesetzt ist.

3. Lagerung nach Anspruch 1 oder 2, d a d u r c h   g e k e n n z e i c h n e t, daß in der Lagerhülse (7) die Tretkurbelwelle (15) eines Tretkurbelantriebs gelagert ist.

- 6 -

**Fig. 1**

Fig. 2

Europäisches Patentamt -

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 920 750 (ZUNDAPP) * Seite 4, Zeile 4 - Seite 5, Zeile 11; Figuren * | 1 | B 62 M 7/04 B 62 K 11/02 |
| A | GB-A-1 219 896 (NORTON VILLIERS) | | |
| A,D | DE-B-1 189 881 (VEB) | | |

---

### RECHERCHIERTE SACHGEBIETE (Int. Cl. 3)

B 62 M
B 62 K
B 60 K

Der vorliegende Recherchenbericht wurde für alle Patentansprüche erstellt.

| Recherchenort | Abschlußdatum der Recherche | Prüfer |
|---|---|---|
| DEN HAAG | 14-06-1982 | NADELHOFFER J. |